# EUROPÄISCHE PATENTSCHRIFT

(11) **EP 4 677 805 B1**
(45) Veröffentlichungstag und Bekanntmachung des Hinweises auf die Patenterteilung: **23.09.2026**
(21) Anmeldenummer: 24718036.7
(22) Anmeldetag: 22.03.2024
(51) Int. Cl.: H04L 9/40, H04L 67/12, H04W 4/70, H04W 12/03, H04W 12/088, H04W 12/108, H04W 12/122

(54) **VERFAHREN ZUM BETREIBEN EINES IOT-GERÄTS MIT APPLIKATIONEN, IOT-GERÄT UND INDUSTRIELLES NETZWERK**
METHOD FOR OPERATING AN IOT DEVICE WITH APPLICATIONS, IOT DEVICE AND INDUSTRIAL NETWORK
PROCÉDÉ DE FONCTIONNEMENT D'UN DISPOSITIF IOT AVEC APPLICATIONS, DISPOSITIF IOT ET RÉSEAU INDUSTRIEL

(30) Priorität: 18.04.2023 EP 23168463; 11.09.2023 EP 23196572
(43) Veröffentlichungstag der Anmeldung: 14.01.2026
(73) Patentinhaber: Siemens Aktiengesellschaft, 80333 München (DE)
(72) Erfinder: FALK, Rainer, 81739 München (DE); FRIES, Steffen, 81739 München (DE); SCHRECK, Thomas, 81739 München (DE)
(74) Vertreter: Siemens Patent Attorneys
(86) Internationale Anmeldenummer: PCT/EP2024/057717
(87) Internationale Veröffentlichungsnummer: WO 2024/217822

(56) Entgegenhaltungen:
- EP-A1- 3 758 320
- WO-A1-2023/025731
- US-A1- 2023 035 007

## Beschreibung

Die Erfindung betrifft ein Verfahren zum Betreiben eines IoT-Geräts mit Applikationen, ein IoT-Gerät sowie ein industrielles Netzwerk zum Betreiben eines drahtlosen industriellen Edge-Cloud-Systems mit einer oder mehreren Basisfunkstationen. Die Erfindung betrifft zudem ein Orchestrationsmodul, eine Basisfunkstation und ein Endgerät.

IoT-Geräte, beispielsweise industrielle Steuergeräte, weisen regelmäßig Schwachstellen auf, die von Angreifern ausgenutzt werden können. Klassische IT-Security-Maßnahmen versuchen, Angriffe so weit möglich zu verhindern, beispielsweise durch das Einspielen von Security-Patches. Gerade in industriellen Umgebungen ist ein Einspielen von Security-Patches jedoch häufig nicht zeitnah möglich, sondern kann nur in einem Wartungsfenster erfolgen. Außerdem müssen manipulierte oder kompromittierte IoT-Geräte als solche erkannt werden, um sie sperren oder außer Betrieb nehmen zu können. Dies kann jedoch zu weitergehenden Auswirkungen, insbesondere zu einem Ausfall oder einer Unterbrechung der Produktion, führen.

Bekannte Alternative, Angriffe so weit möglich zu verhindern, umfassen einen Einsatz von Drittgeräten. Die EP3758320A1 betrifft Verfahren und Geräte, die eine Überwachung in Automatisierungsanlagen mittels eines Überprüfungsgerätes realisieren, wobei das Überprüfungsgeräte eine Überprüfung von zu überwachenden Geräten der Automatisierungsanlage anhand eines Lebenszyklus-Zustandes eines entsprechenden Gerätes durchführt. Das Überprüfungsgerät verfügt über eine Kommunikationsschnittstelle, die zum Empfangen von Lebenszyklusdaten der zu überwachenden Geräte eingerichtet ist, sowie über ein Überprüfungsmodul, welches ein Prüfergebnis als Ergebnis einer Prüfung der Lebenszyklusdaten des Gerätes ermittelt. Abhängig von diesem Prüfergebnis werden Steuerbefehle zum Steuern des zu überwachenden Gerätes, Steuern einer Kommunikation mit dem zu überwachenden Gerät und/oder Steuerbefehle zum Authentisieren des zu überwachenden Gerätes bereitgestellt bzw. ausgeführt.

Die WO2023025731A1 betrifft ein Automatisierungssystem, welches mindestens eine Komponente mit einer Applikation aufweist. Die Applikation bildet eine mittels eines Containers oder mittels einer virtuellen Maschine eine lauffähige Anwendung. Das Automatisierungssystem weist weiterhin ein sicheres Gateway auf, über welches die Applikation mit einem externen Gerät oder Netzwerk kommuniziert. Das sichere Gateway hält Filterregeln für den Kommunikationsverkehr der jeweiligen Applikation vor, anhand derer der Kommunikationsverkehr für die jeweilige Applikation zu filtern ist.

Die US20230035007A1 betrifft ein Sicherheitsgateway in einer »Brownfield«-Umgebung (also in bestehende Systeme integriert), welches eine Trusted Execution Environment (TEE) unterstützt, die kryptografische und physische Sicherheit verwendet, um sensible Übertragungen zu einem steuerbaren Gerät zu schützen. Das Sicherheitsgateway ist eingerichtet, um Inhalte innerhalb einer Übertragung zu filtern. Wenn das Sicherheitsgateway die Übertragung autorisiert, wird sie an ein vertrauenswürdiges Peripheriegerät weitergeleitet, das mit entsprechenden vertrauenswürdigen Kommunikationsprotokollen konfiguriert ist, von wo aus eine weitere Übertragung an das steuerbare Gerät erfolgt. Das vertrauenswürdige Peripheriegerät und das steuerbare Gerät sind beispielsweise durch geschützte Verteilungssysteme physisch geschützt. Somit fungiert das vertrauenswürdige Peripheriegerät als weiteres Gateway zwischen dem Sicherheitsgateway und dem steuerbaren Gerät.

Daher besteht ein Bedarf an gegenüber Angriffen resilienteren IoT-Geräten. Insbesondere sollen die IoT-Geräte hinsichtlich ihrer Kernfunktionalitäten gegenüber Bedrohungen durch bekannte, ungepatchte, Schwachstellen oder einer bekannten oder vermuteten Manipulation resilienter betrieben werden können.

Die Realisierung einer Zero-Trust-basierten Zugriffskontrolle ist, anders als bei einem HTTP-basierten Zugriff auf Server, bei industriellen Applikationsprotokollen wie z.B. MQTT, OPC UA häufig nicht praktikabel umsetzbar, da dazu die verwendeten Applikationsprotokolle angepasst werden müssen.

Es ist daher Aufgabe der Erfindung, ein gegenüber dem Stand der Technik verbessertes Verfahren zum Betreiben eines IoT-Geräts mit Applikationen anzugeben. Insbesondere soll das IoT-Gerät sicherer betrieben werden können als bislang bekannt und/oder ein besonders unterbrechungsfreier Betrieb des IoT-Geräts möglich sein. Ferner ist es Aufgabe der Erfindung, ein verbessertes IoT-Gerät anzugeben, mit welchem insbesondere das erfindungsgemäße Verfahren ausführbar ist. Weiterhin ist es Aufgabe der Erfindung, ein verbessertes industrielles Netzwerk mit zwei oder mehr solcher IoT-Geräte anzugeben.

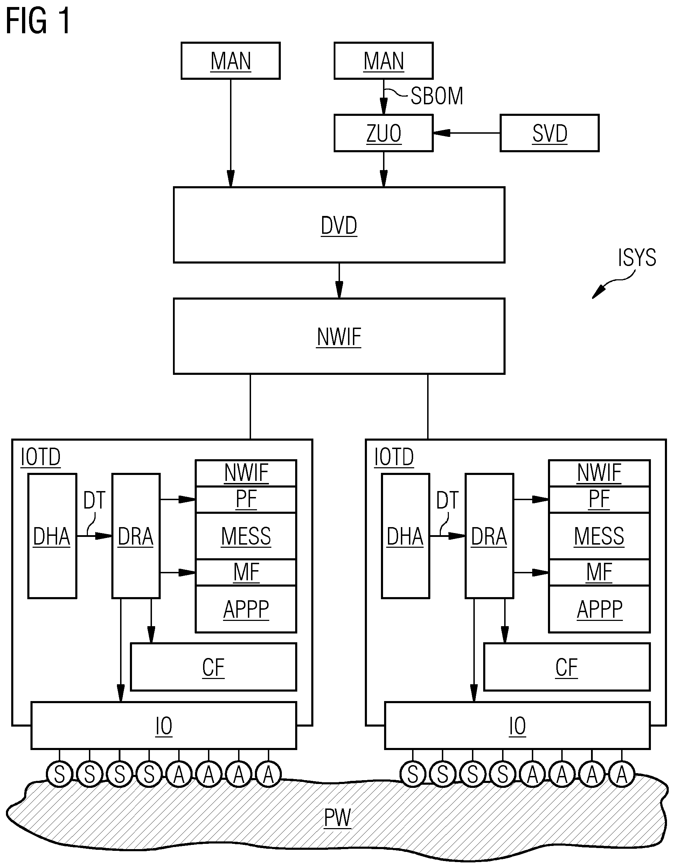

Diese Aufgabe der Erfindung wird mit einem Verfahren zum Betreiben eines IoT-Geräts mit Applikationen mit den in Anspruch 1 angegebenen Merkmalen sowie mit einem IoT-Gerät mit den in Anspruch 7 angegebenen Merkmalen sowie mit einem industriellen Netzwerk mit den in Anspruch 11 angegebenen Merkmalen gelöst. Bevorzugte Weiterbildungen der Erfindung sind in den zugehörigen Unteransprüchen, der nachfolgenden Beschreibung und der Zeichnung angegeben.

Bei dem erfindungsgemäßen Verfahren zum Betreiben eines IoT-Geräts mit Applikationen, die gemäß Applikationsprotokollen Nachrichten verarbeiten, werden durch das IoT-Gerät Nachrichten für die Applikationsprotokolle entgegengenommen und es wird ein Geräteintegritätsstatus des Geräts herangezogen, und die Nachrichten für die Applikationsprotokolle werden abhängig vom Geräteintegritätsstatus gefiltert und die Nachrichten werden, nachdem sie gefiltert worden sind, gemäß den Applikationsprotokollen verarbeitet.'

Die Kernidee der Erfindung besteht also darin, die Applikationsprotokollkommunikation von Applikationen von IoT-Geräten abhängig vom aktuellen Device Trust zu beschränken. Dadurch werden die Steuermöglichkeiten und damit der potenziell auftretende Schaden begrenzt. Anders als im Stand der Technik bekannt müssen dazu die verwendeten Applikationsprotokolle selbst nicht angepasst werden. Stattdessen kann mittels der Filterung abhängig vom Geräteintegritätsstatus die Nachricht, bereits vor ihrer Verarbeitung, durch die eine oder die mehreren Applikationen ausgefiltert werden. Folglich ist die Gerätesicherheit erheblich erhöht.

Die beschriebene Erfindung unterstützt mit anderen Worten das Ziel einer verbesserten Resilienz eines IoT-Systems. Erfindungsgemäß kann erreicht werden, dass auch bei laufenden Angriffen zumindest ein eingeschränkter Betrieb des oder der IoT-Geräte möglich ist, wobei mittels der Filterung abhängig vom Geräteintegritätsstatus des IoT-Geräts eine Kontrolle über die potenziellen Schadensauswirkungen besteht. Dieser Resilienz-Schutz kann erfindungsgemäß in einer nach Zero-Trust-Philosophie geschützten Umgebung realisiert werden, da er auch bei einer verschlüsselten Kommunikation greift. Er ist dabei auch in einer industriellen IoT-Umgebung umsetzbar, bei der etablierte Applikationsprotokolle, insbesondere Steuerungsprotokolle, verwendet werden, die nicht einfach erweitert oder angepasst werden können.

Bevorzugt wird die Geräteintegritätsinformation gebildet, indem eine Information über die Softwarekomponenten des IoT-Geräts herangezogen wird und eine Information über Schwachstellen dieser Softwarekomponenten herangezogen wird. Infolge einer Zuordnung bekannter Schwachstellen der Softwarekomponenten zu diejenigen Softwarekomponenten, welche in und/oder an und/oder auf dem IoT-Gerät tatsächlich implementiert sind, kann anhand der Schwachstellen der Softwarekomponenten eine Geräteintegritätsinformation berechnet werden. Gerade die Berücksichtigung der tatsächlich genutzten Softwarekomponenten ermöglicht eine besonders zuverlässige Beurteilung der Geräteintegritätsinformation und folglich eine besonders wirksame Implementierung des erfindungsgemäßen Verfahrens.

Vorzugsweise werden bei dem erfindungsgemäßen Verfahren die Nachrichten, bevor sie für die Applikationsprotokolle abhängig vom Geräteintegritätsstatus gefiltert werden, entschlüsselt, vorzugsweise mittels TLS und/oder DTLS und/oder QUICK. In dieser Weiterbildung ist das erfindungsgemäße Verfahren mit typischen IoT-Geräte-Umgebungen kompatibel, in welchen verschlüsselte Kommunikation regelmäßig oder stets genutzt wird. Infolge der Filterung von Nachrichten nach ihrer Entschlüsselung und vor ihrer Verarbeitung durch die Applikationsprotokolle der einen oder mehreren Applikationen ist das erfindungsgemäße Verfahren vielfältig und mit bislang genutzten Verfahren kompatibel einsetzbar.

In einer bevorzugten Weiterbildung des Verfahrens gemäß der Erfindung umfassen die Applikationsprotokolle OPC UA und/oder XMPP und/oder MQTT. Insbesondere diese Applikationsprotokolle lassen sich schwer oder überhaupt nicht sinnvoll in Produktivumgebungen anpassen, sodass insbesondere in dieser Weiterbildung große Vorteile des erfindungsgemäßen Verfahrens bestehen.

Bei dem erfindungsgemäßen Verfahren wird das IoT-Gerät vorzugsweise in einem industriellen Netzwerk betrieben. Insbesondere in industriellen Netzwerken wäre ein Ausfall des IoT-Geräts infolge der damit einhergehenden Produktivitätseinbußen nachteilig. Erfindungsgemäß lässt sich eine Ausfallzeit von IoT-Geräten zum einen deutlich geringhalten und zugleich die Sicherheit beim Einsatz des IoT-Geräts hochhalten.

Besonders bevorzugt ist bei dem erfindungsgemäßen Verfahren das IoT-Gerät ein Fertigungsgerät und/oder ein Transportgerät und/oder ein Wartungsinstrument und/oder ein Logistikgerät. Insbesondere die vorgenannten Anwendungsfälle erfordern regelmäßig den Einsatz von IoT-Geräten mit einer hohen Rate von ausgetauschten Nachrichten. Folglich lässt sich das erfindungsgemäße Verfahren gerade in den vorgenannten Anwendungsfällen besonders vorteilhaft einsetzen.

Das erfindungsgemäße IoT-Gerät ist ausgebildet, mittels eines erfindungsgemäßen Verfahrens wie vorhergehend beschrieben betrieben zu werden. Das erfindungsgemäße IoT-Gerät weist Applikationen auf, die gemäß Applikationsprotokollen Nachrichten verarbeiten, das IoT-Gerät ist zur Entgegennahme von Nachrichten für die Applikationsprotokolle ausgebildet, wobei ein Nachrichtenfilter für Nachrichten vorhanden ist, der zur Filterung von Nachrichten für die Applikationsprotokolle abhängig von einem Geräteintegritätsstatus ausgebildet ist, wobei der Nachrichtenfilter die gefilterten Nachrichten den Applikationen zur Verarbeitung der Nachrichten entsprechend den Applikationsprotokollen zugeführt werden. Für das erfindungsgemäße IoT-Gerät ergeben sich folglich die dieselben Vorteile wie bereits zum erfindungsgemäßen Verfahren näher erläutert.

Das erfindungsgemäße IoT-Gerät weist bevorzugt eine Entschlüsselungseinrichtung auf, die zur Entschlüsselung der Nachrichten, vorzugsweise mittels TLS und/oder DTLS und/oder QUICK, eingerichtet ist und welche zur Übermittlung der entschlüsselten Nachrichten an den Nachrichtenfilter eingerichtet ist.

In einer bevorzugten Weiterbildung des erfindungsgemäßen IoT-Geräts ist dieses ein Fertigungsgerät und/oder ein Transportgerät und/oder ein Wartungsinstrument und/oder ein Logistikgerät. Alternativ und ebenfalls bevorzugt bildet das erfindungsgemäße IoT-Gerät ein cyber-physikalisches Gerät.

Vorzugsweise umfassen bei dem erfindungsgemäßen IoT-Gerät die Applikationsprotokolle OPC UA und/oder XMPP und/oder MQTT.

Das erfindungsgemäße industrielle Netzwerk weist zwei oder mehr IoT-Geräte auf, welche miteinander kommunikationsverbunden sind.

Besonders bevorzugt bildet das industrielle Netzwerk ein cyber-physikalisches System.

Nachfolgend wird die Erfindung anhand eines in der Zeichnung dargestellten Ausführungsbeispiels näher erläutert.

Die einzige Zeichnungsfigur 1 zeigt schematisch in einer Prinzipskizze ein industrielles IoT-System ISYS. Das dargestellte IoT-System ISYS ist ein Fertigungssystem. In weiteren, nicht eigens dargestellten Ausführungsbeispielen kann das IoT-System ISYS auch ein Transportlogistiksystem, etwa mit autonomen Fahrzeugen, oder ein Wartungssystem oder ein anderes industrielles IoT-System ISYS, etwa ein cyber-physikalisches System, sein.

Das industrielle IoT-System ISYS umfasst eine Mehrzahl von IoT-Geräten IOTD. Im dargestellten Ausführungsbeispiel sind die IoT-Geräte IOTD Fertigungswerkzeuge wie beispielsweise Bohrwerkzeuge. Die IoT-Geräte IOTD umfassen Sensoren S und Aktoren A zur Interaktion mit der physischen Welt PW. Die Sensoren S dienen zur Erfassung eines Werkstücks und die Aktoren A dienen zur Bearbeitung des Werkstücks, beispielsweise Bohrer zum Bohren von Löchern in das Werkstück. Diese Sensoren S und Aktoren A werden in an sich bekannter Weise mittels einer Input-Output-Schnittstelle IO durch übrige Komponenten des IoT-Geräts IOTD ausgelesen und angesteuert. Zudem stehen die IoT-Geräte miteinander in Kommunikationsverbindung.

Im dargestellten Ausführungsbeispiel wird eine Applikationsprotokoll-Kommunikation abhängig vom aktuellen Device Trust DT beschränkt. Auf diese Weise werden durch die Applikationsprotokoll-Kommunikation eröffnete Steuermöglichkeiten der mit diesen Steuermöglichkeiten potenziell auftretende Schaden begrenzt. Mittels der dargestellten erfindungsgemäßen Lösung ist es nicht erforderlich, verwendete Applikationsprotokolle APPP selbst anzupassen.

Bei der dargestellten erfindungsgemäßen Lösung ist auf einem IoT-Gerät IOTD ein "Device Resilience Agent" DRA vorgesehen. Zum einen übernimmt der Device Resilience Agent DRA in an sich bekannter Weise mittels eines Paketfilters PF eine Paketfilterung des vom IoT-Gerät IOTD entgegengenommenen Datenstroms NWIF. Nach der Paketfilterung wird der Datenstrom NWIF in an sich bekannter Weise entschlüsselt, vorliegend mittels der Verschlüsselungsprotokolle TLS, DTLS und QUICK.

Darüber hinaus weist das IoT-Gerät IOTD jedoch auch einen Message Filter MF zur Filterung der Nachrichten MESS des verwendeten Applikationsprotokolls APPP auf. Mittels dieses Message Filters MF wird der entschlüsselte Datenstrom nicht unmittelbar in den Applikationsprotokollen APPP, vorliegend beispielsweise OPC UA und XMPP und MQTT, verwendet.

Stattdessen filtert der Message Filter MF, im dargestellten Ausführungsbeispiel beschränkt, die Nachrichten MESS spezifisch für jedes jeweils verwendete Applikationsprotokoll APPP und übergibt die entsprechend gefilterten Nachrichten MESS zur weiteren Verarbeitung an das jeweilige Applikationsprotokoll APPP.

Somit erfolgt bei dem erfindungsgemäßen Verfahren die Gerätekommunikation des IoT-Geräts IOTD verschlüsselt wie bei einem Zero-Trust-Ansatz üblich. Zugleich wird aber infolge der Filterung der Nachrichten MESS mittels des speziellen Message Filters MF eine mögliche unerwünschte Beeinflussung, beispielsweise ein Schaden, vermieden oder begrenzt. Somit wird die Resilienz des IoT-Gerätes IOTD und damit des industriellen Systems ISYS verbessert.

Der Device Resilience Agent DRA ermittelt einen Device-Trust-Status DTS und passt davon abhängig die Filterregeln des Message Filters MF an. Zusätzlich können auch eine IoT-Control-Function des IoT-Geräts IOTD und/oder ein Paketfilter des IoT-Geräts IOTD und/oder eine I/O-Schnittstelle des IoT-Geräts IOTD angepasst werden.

Der Device Trust DT des IoT-Geräts IOTD kann lokal auf dem IoT-Gerät IOTD ermittelt werden, z.B. durch ein Geräteintegritätsüberwachungssystem auf dem IoT-Gerät IOTD in der Art eines an sich bekannten und sogenannten Device Health Checks, der von einem Device Health Agent DHA durchgeführt wird. Der Device Trust DT kann alternativ oder zusätzlich auch Geräte-extern ermittelt werden, im dargestellten Beispiel durch einen Zero Trust Device Manager ZTDM. Dieser kann auch Schwachstelleninformationen verwenden, die direkt vom Gerätehersteller MAN des IoT-Geräts IOTD mittels einer Geräteschwachstellendatenbank DVD bereitgestellt werden oder die indirekt mittels der vom Gerätehersteller MAN zur Verfügung gestellten SBOM "Software Bill of Material" des IoT-Geräts IOTD und bekannter Schwachstellen von von diesem IoT-Gerät IOTD verwendeter Softwarekomponenten ermittelt werden. Diese Schwachstellen der Softwarekomponenten können dann auf Geräteschwachstellen mittels einer Zuordnungsdatenbank ZUO abgebildet werden. Die Schwachstellen der Softwarekomponenten können etwa einer Softwareschachstellendatenbank SVD entnommen werden können. Auch die derart indirekt ermittelten Schwachstelleninformationen des IoT-Geräts IOTD können in die Geräteschwachstellendatenbank DVD eingestellt werden. Die Schwachstelleninformationen des IoT-Geräts IOTD der Geräteschwachstellendatenbank DVD werden vom Zero Trust Device Manager ZTDM herangezogen, um den Device Trust DT des IoT-Geräts IOTD zu ermitteln. Der aktuelle Device-Trust DT kann dadurch basierend auf den aktuell bekannten Schachstellen der genutzten Software-Komponenten ermittelt werden. Weiterhin kann eine Integritäts-Attestierung des IoT-Geräts IOTD ausgewertet werden, oder ein Device-Compliance-Status eines Gerätemanagement-Systems.

Optional und nicht dargestellt kann eine Sicherheitslageinformation herangezogen und ausgewertet werden, die angibt, welche Schwachstellen aktuell aktiv ausgenutzt werden und welche Regionen oder Netzwerkbereiche dies betrifft. Eine solche Information kann beispielsweise von einem Security-Monitoring-System bereitgestellt werden.

In einem komplexen industriellen System ISYS mit einer Mehrzahl oder Vielzahl von IoT-Geräten IOTD kann die Erfindung auf allen oder nur einer Teilmenge der verwendeten IoT-Geräte IOTD umgesetzt sein. Die IoT-Geräte IOTD können allgemein als fest integrierte Komponente realisiert sein. Die IoT-Geräte IOTD können alternativ als eine Komponente mit mehreren Teilmodulen, beispielsweise als eine speicherprogrammierbare Steuerung mit Erweiterungsmodulen in der Art von Technologiemodulen oder abgesetzten Input-Output-Modulen, oder als virtualisierte IoT-Komponente, beispielsweise eine virtualisierte PLC, realisiert sein.

Die für die erfindungsgemäße Resilienz-Funktionalität des IoT-Geräts IOTD vorgesehenen Komponenten in Form des Message Filters MF und des Device Resilience Agent DRA sind beispielsweise in einer geschützten, vertrauenswürdigen Ausführungsumgebung realisiert, im dargestellten Ausführungsbeispiel in einer ARM TrustZone. Alternativ kann die geschützte, vertrauenswürdige Ausführungsumgebung auch als separater Resilience-Prozessorbaustein oder als FPGA oder als ASIC realisiert sein.

In weiteren, nicht eigens dargestellten Ausführungsbeispielen, welche im Übrigem dem dargestellten Ausführungsbeispiel entsprechen, ist die Implementierung speziell angriffsgeschützt, beispielsweise durch Nutzung von Exploit-Protection-Technologien wie ASLR oder Stack Protection oder Memory Encryption oder Control Flow Integrity oder einer Kombination solcher Exploit-Protection-Technologien. Dadurch ist diese spezielle Resilienz-Funktionalität schwer oder nicht angreifbar und damit vertrauenswürdig, selbst wenn die allgemeine Geräte-Funktionalität des IoT-Geräts IOTD, beispielsweise ein Network Stack oder eine Control Function CF des IoT-Geräts IOTD, bereits kompromittiert ist.

Zusätzlich wird in weiteren Ausführungsbeispielen von Betreibern eines industriellen Systems ISYS angegeben, welche Aktionen unter welchen Sicherheitsstufen erlaubt sind. Damit soll es ermöglicht werden, aufgrund der aktuellen Bedrohungslage vorgegebene Aktionen oder Funktionalitäten des IoT-Geräts IOTD einzuschränken.

## Patentansprüche

1. Verfahren zum Betreiben eines IoT-Geräts (IOTD) mit einer oder mehreren Applikationen, die gemäß Applikationsprotokollen (APPP) Nachrichten (MESS) verarbeiten, bei welchem durch das IoT-Gerät (IOTD) Nachrichten (MESS) für die Applikationsprotokolle (APPP) entgegengenommen werden, **dadurch gekennzeichnet, dass** ein Geräteintegritätsstatus (DT) des Geräts herangezogen wird und die Nachrichten (MESS) für die Applikationsprotokolle (APPP) abhängig vom Geräteintegritätsstatus (DT) gefiltert werden und die Nachrichten (MESS), nachdem sie gefiltert worden sind, von der oder den Applikationen gemäß den Applikationsprotokollen (APPP) verarbeitet werden.

2. Verfahren nach dem vorhergehenden Anspruch, bei welchem die Applikationsprotokolle (APPP) nicht angepasst werden.

3. Verfahren nach einem der vorhergehenden Ansprüche, bei welchem die IoT-Nachrichten (MESS), bevor sie für die Applikationsprotokolle (APPP) abhängig vom Geräteintegritätsstatus (DS) gefiltert werden, entschlüsselt werden, vorzugsweise mittels TLS und/oder DTLS und/oder QUICK.

4. Verfahren nach einem der vorhergehenden Ansprüche, bei welchem die Applikationsprotokolle (APPP) OPC UA und/oder XMPP und/oder MQTT umfassen.

5. Verfahren nach einem der vorhergehenden Ansprüche, bei welchem das IoT-Gerät (IOTD) in einem industriellen Netzwerk (ISYS) betrieben wird.

6. Verfahren nach einem der vorhergehenden Ansprüche, bei welchem das IoT-Gerät (IOTD) ein Fertigungsgerät und/oder ein Transportgerät und/oder ein Wartungsinstrument und/oder ein Logistikgerät ist.

7. IoT-Gerät, ausgebildet zum Betreiben mittels eines Verfahrens nach einem der vorhergehenden Ansprüche, welches eine oder mehrere Applikationen aufweist, die gemäß Applikationsprotokollen (APPP) Nachrichten verarbeiten, und welches zur Entgegennahme von Nachrichten (MESS) für die Applikationsprotokolle (APPP) ausgebildet ist, **dadurch gekennzeichnet, dass** ein Nachrichtenfilter (MF) für Nachrichten (MESS) vorhanden ist, der zur Filterung von Nachrichten (MESS) für die Applikationsprotokolle (APPP) abhängig von einem Geräteintegritätsstatus (DT) ausgebildet ist, wobei der Nachrichtenfilter (MF) die gefilterten Nachrichten (MESS) der oder den Applikationen zur Verarbeitung der Nachrichten entsprechend den Applikationsprotokollen (APPP) zugeführt werden.

8. IoT-Gerät nach dem vorhergehenden Anspruch, welches eine Entschlüsselungseinrichtung aufweist, die zur Entschlüsselung der Nachrichten (MESS) eingerichtet ist, vorzugsweise mittels TLS und/oder DTLS und/oder QUICK, und welche zur Übermittlung der entschlüsselten Nachrichten (MESS) an den Nachrichtenfilter (MF) eingerichtet ist.

9. IoT-Gerät nach einem der vorhergehenden Ansprüche, welches ein Fertigungsgerät und/oder ein Transportgerät und/oder ein Wartungsinstrument und/oder ein Logistikgerät ist.

10. IoT-Gerät nach einem der vorhergehenden Ansprüche, bei welchem die Applikationsprotokolle (APPP) OPC UA und/oder XMPP und/oder MQTT umfassen.

11. Industrielles Netzwerk mit zwei oder mehr IoT-Geräten nach einem der vorhergehenden Ansprüche, bei welchem die IoT-Geräte (IOTD) miteinander kommunikationsverbunden sind.

12. Industrielles Netzwerk nach dem vorherigen Anspruch, welches ein cyber-physikalisches System bildet.

## Claims

1. Method for operating an IoT device (IOTD) having one or more applications which process messages (MESS) according to application protocols (APPP), in which messages (MESS) for the application protocols (APPP) are received by the IoT device (IOTD), **characterized in that** a device integrity status (DT) of the device is used, and the messages (MESS) for the application protocols (APPP) are filtered on the basis of the device integrity status (DT), and the messages (MESS), after they have been filtered, are processed by the application(s) according to the application protocols (APPP).

2. Method according to the preceding claim, in which the application protocols (APPP) are not adapted.

3. Method according to one of the preceding claims, in which theIoT messages (MESS), before they are filtered for the application protocols (APPP) on the basis of the device integrity status (DS), are decrypted, preferably by means of TLS and/or DTLS and/or QUIC.

4. Method according to one of the preceding claims, in which the application protocols (APPP) comprise OPC UA and/or XMPP and/or MQTT.

5. Method according to one of the preceding claims, in which the IoT device (IOTD) is operated in an industrial network (ISYS).

6. Method according to one of the preceding claims, in which the IoT device (IOTD) is a manufacturing device and/or a transport device and/or a maintenance instrument and/or a logistics device.

7. IoT device designed for operation by means of a method according to one of the preceding claims, which has one or more applications which process messages according to application protocols (APPP) and is designed to receive messages (MESS) for the application protocols (APPP), **characterized in that** there is a message filter (MF) for messages (MESS) which is designed to filter messages (MESS) for the application protocols (APPP) on the basis of a device integrity status (DT), wherein the message filter (MF) supplies the filtered messages (MESS) to the application(s) for processing the messages according to the application protocols (APPP).

8. IoT device according to the preceding claim, which has a decryption device which is configured to decrypt the messages (MESS), preferably by means of TLS and/or DTLS and/or QUIC, and is configured to transmit the decrypted messages (MESS) to the message filter (MF).

9. IoT device according to one of the preceding claims, which is a manufacturing device and/or a transport device and/or a maintenance instrument and/or a logistics device.

10. IoT device according to one of the preceding claims, in which the application protocols (APPP) comprise OPC UA and/or XMPP and/or MQTT.

11. Industrial network having two or more IoT devices according to one of the preceding claims, in which theIoT devices (IOTD) are communicatively connected to one another.

12. Industrial network according to the preceding claim, which forms a cyber-physical system.

## Revendications

1. Procédé pour le fonctionnement d'un appareil IoT (IOTD) avec une ou plusieurs applications qui traitent des messages (MESS) selon des protocoles d'application (APPP), dans lequel des messages (MESS) pour les protocoles d'application (APPP) sont reçus par le biais de l'appareil IoT (IOTD), **caractérisé en ce qu'**un statut d'intégrité d'appareil (DT) de l'appareil est consulté et que les messages (MESS) pour les protocoles d'application (APPP) sont filtrés en fonction du statut d'intégrité d'appareil (DT), et les messages (MESS), après qu'ils ont été filtrés, sont traités par l'application ou les applications selon les protocoles d'application (APPP).

2. Procédé selon la revendication précédente, dans lequel les protocoles d'application (APPP) ne sont pas adaptés.

3. Procédé selon l'une des revendications précédentes, dans lequel les messages d'IoT (MESS), avant qu'ils soient filtrés pour les protocoles d'application (APPP) en fonction du statut d'intégrité d'appareil (DT), sont déchiffrés, de préférence au moyen de TLS et/ou de DTLS et/ou de QUICK.

4. Procédé selon l'une des revendications précédentes, dans lequel les protocoles d'application (APPP) comportent OPC UA et/ou XMPP et/ou MQTT.

5. Procédé selon l'une des revendications précédentes, dans lequel l'appareil IoT (IOTD) est mis en fonctionnement dans un réseau industriel (ISYS).

6. Procédé selon l'une des revendications précédentes, dans lequel l'appareil IoT (IOTD) est un appareil de fabrication et/ou un appareil de transport et/ou un instrument de maintenance et/ou un appareil logistique.

7. Appareil IoT, conçu pour être mis en fonctionnement au moyen d'un procédé selon l'une des revendications précédentes, lequel comprend une ou plusieurs applications qui traitent des messages selon des protocoles d'application (APPP), et lequel est conçu pour la réception de messages (MESS) pour les protocoles d'application (APPP), **caractérisé en ce qu'**il est prévu un filtre de messages (MF) pour des messages (MESS), lequel est conçu pour le filtrage de messages (MESS) pour les protocoles d'application (APPP) en fonction d'un statut d'intégrité d'appareil (DT), dans lequel le filtre de messages (MF) fournit les messages (MESS) filtrés à l'application ou aux applications pour le traitement des messages de manière correspondante aux protocoles d'application (APPP).

8. Appareil IoT selon la revendication précédente, lequel comprend un dispositif de déchiffrage qui est configuré pour le déchiffrage des messages (MESS), de préférence au moyen de TLS et/ou de DTLS et/ou de QUICK, et qui est configuré pour le transfert des messages (MESS) déchiffrés au filtre de messages (MF).

9. Appareil IoT selon l'une des revendications précédentes, lequel est un appareil de fabrication et/ou un appareil de transport et/ou un instrument de maintenance et/ou un appareil logistique.

10. Appareil IoT selon l'une des revendications précédentes, dans lequel les protocoles d'application (APPP) comportent OPC UA et/ou XMPP et/ou MQTT.

11. Réseau industriel avec deux appareils IoT ou plus selon l'une des revendications précédentes, dans lequel les appareils IoT (IOTD) sont reliés les uns aux autres à des fins de communication.

12. Réseau industriel selon la revendication précédente, lequel forme un système cyber-physique.
